# DEMANDE DE BREVET EUROPEEN

(11) **EP 2 372 626 A1**
(43) Date de publication de la demande: **05.10.2011**
(21) Numéro de dépôt: 11159433.9
(22) Date de dépôt: 23.03.2011
(51) Int. Cl.: G06Q 10/00, G06Q 30/00

(54) **Procédé de traitement d'image avec anonymisation dynamique**

(30) Priorité: 31.03.2010 FR 1052422
(71) Demandeur: France Telecom, 75015 Paris (FR)
(72) Inventeur: Roullière, Stéphane, 35000, RENNES (FR); Fabre, Olivier, 35200, RENNES (FR)

(57) **Abrégé**

Procédé de traitement d'au moins une image, comprenant une représentation d'un premier utilisateur (UB) et destinée à être présentée à un deuxième utilisateur (UC), comprenant:
- une étape d'obtention (105) d'une information représentative, soit d'une absence de relation entre le premier et le deuxième utilisateur, soit d'une relation existant entre le premier et le deuxième utilisateur;
- une étape de modification (106) de ladite image avant présentation au deuxième utilisateur, de manière à ce que le premier utilisateur ne soit pas identifiable par le deuxième utilisateur,

ladite étape de modification étant destinée à être exécutée s'il est déterminé, conformément à au moins une règle d'anonymisation définie relativement à ladite information, que ladite image doit subir une telle modification.

## Description

L'invention concerne le domaine des contenus numériques et plus précisément un procédé de traitement d'image et dispositif correspondant.

L'invention trouve une application dans le domaine des réseaux de télécommunication et de l'Internet, et plus particulièrement, dans le domaine des services en ligne proposant des fonctionnalités de partage de contenus numériques en ligne, par exemple au sein d'un réseau social.

En particulier, l'objectif des réseaux sociaux est de permettre aux membres d'une communauté d'interagir entre eux d'une part, et de partager des contenus d'autre part. Le partage de contenu consiste à rendre accessible un document multimédia à un plusieurs membres de la communauté.

Lors d'un partage de contenu par un membre, la liste des membres habilités à avoir accès à ce contenu est établie par le propriétaire du contenu. Un contenu multimédia ainsi partagé est donc soit entièrement visible par un autre membre que le propriétaire, soit invisible, selon l'appartenance ou non à la liste de membres habilités. Il n'existe pas d'autres outils pour gérer la visibilité d'un contenu partagé au sein d'un réseau social.

Les inventeurs ont ainsi constaté le besoin de disposer de moyens de gérer plus finement la manière de partager des contenus.

Dans le contexte du réseau social, et dans le cas particulier du partage d'une photo ou d'une vidéo où apparaissent des personnes physiques, l'exposition de l'ensemble de ces personnes physiques ne peut en effet être contrôlée que par le propriétaire par le biais l'autorisation d'accès au contenu intégral lui même.

Ce principe est aujourd'hui problématique car il implique qu'une photo peut circuler au sein d'un groupe de membres sans tenir compte du souhait de mise en visibilité des personnes apparaissant sur la photo.

Un utilisateur n'a donc pas de moyen technique de contrôler ni de mesurer l'exposition de son image dans le réseau social. En outre, ce système ne favorise pas le respect du droit à l'image en vigueur en France notamment.

Dans ce contexte, le but de l'invention est de donner la possibilité à un utilisateur d'un réseau social de contrôler la diffusion de son image au sein de ce réseau social.

Un des buts de l'invention est de remédier à des problèmes, inconvénients ou insuffisances de l'état de la technique et/ou d'y apporter des améliorations.

L'invention concerne, selon un premier aspect, un procédé de traitement d'au moins une image, comprenant une représentation d'un premier utilisateur et destinée à être présentée à un deuxième utilisateur, comprenant:
- une étape d'obtention d'une information représentative, soit d'une absence de relation entre le premier et le deuxième utilisateur, soit d'une relation existant entre le premier et le deuxième utilisateur;
- une étape pour déterminer, conformément à au moins une règle d'anonymisation définie relativement à ladite information, si ladite image doit subir, avant présentation au deuxième utilisateur, une modification par application d'une fonction de traitement d'image rendant le premier utilisateur non identifiable par le deuxième utilisateur;
- une étape de modification d'au moins une zone de ladite image contenant ladite représentation par application d'une dite fonction de traitement d'image.

Les règles d'anonymisation paramétrables selon la relation (ou absence de relation) existant entre deux utilisateurs, permettent de prendre en compte, lors du partage de contenus, les modes d'interaction entre les utilisateurs du réseau au sein duquel est mis en oeuvre ce partage de contenus. Il est ainsi possible de contrôler l'anonymisation des images en fonction des utilisateurs auxquels ces images sont présentées. Un utilisateur peut ainsi rester anonyme sur des photos numériques qui sont diffusées à tous les utilisateurs membres du réseau, sauf sur celles qui sont présentées à ses amis, ou à un groupe de personne choisi.

Dans la mise en oeuvre de l'invention, toute relation existant, implicitement ou explicitement, entre deux utilisateurs est susceptible d'être considérée. En effet, dans un réseau social, une relation n'est pas forcément explicite (déclarée ou qualifiée par un utilisateur qui déclarerait un autre utilisateur comme faisant partie par exemple de son groupe d'amis), mais peut aussi être implicite: n'être ni déclarée, ni qualifiée explicitement par un utilisateur, mais résultant par exemple implicitement de paramétrages effectués par un utilisateur, définissant des groupes d'utilisateurs avec lesquels il interagit ou communique de manière différente. Dans ce deuxième cas en effet, à chaque groupe d'utilisateurs est associée une relation implicite entre les utilisateurs de ce groupe, définie comme étant l'appartenance à ce groupe d'utilisateurs.

L'invention offre une fonctionnalité inédite permettant de garantir dans un réseau social la protection d'un droit fondamental : le droit à l'image. Elle est applicable à tout service de partage de contenus existant.

Selon un premier mode de réalisation du procédé selon l'invention, ladite relation est une relation au sein d'un réseau social dont font partie le premier et le deuxième utilisateur. De cette manière, cette relation (ou absence de relation) étant une information connue au sein du réseau social, cette information est directement exploitable pour d'une part, définir des règles d'anonymisation et d'autre part, procéder de manière automatisée aux modifications d'images requises en fonction des règles basées sur cette information.

Selon un autre mode de réalisation du procédé selon l'invention, une dite règle d'anonymisation est définie par le premier utilisateur. Chaque premier utilisateur contrôle ainsi la diffusion des images qui comprennent une représentation de cet utilisateur.

Selon un autre mode de réalisation, le procédé selon l'invention comprend en outre, une étape d'envoi d'une notification au premier utilisateur pour l'informer de la présentation de ladite image audit deuxième utilisateur. Un moyen complémentaire est ainsi mis à disposition du premier utilisateur pour contrôler la diffusion des images qui comprennent une représentation de cet utilisateur.

Les différents modes de réalisation mentionnés ci-dessus sont combinables entre eux pour la mise en oeuvre de l'invention.

L'invention concerne selon un deuxième aspect un dispositif de traitement d'au moins une image, comprenant une représentation d'un premier utilisateur et destinée à être présentée à un deuxième utilisateur, comprenant:
- des moyens d'obtention d'une information représentative, soit d'une absence de relation entre le premier et le deuxième utilisateur, soit d'une relation existant entre le premier et le deuxième utilisateur;
- des moyens pour déterminer, conformément à au moins une règle d'anonymisation définie relativement à ladite information, si ladite image doit subir, avant présentation au deuxième utilisateur, une modification par application d'une fonction de traitement d'image rendant le premier utilisateur non identifiable par le deuxième utilisateur;
- des moyens de modification d'au moins une zone de ladite image contenant ladite représentation par application d'une dite fonction de traitement d'image.

Les avantages énoncés pour le procédé selon l'invention sont transposables directement au dispositif selon l'invention.

Plus généralement, le dispositif selon l'invention comprend des moyens de mise en oeuvre des étapes du procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif de traitement d'image et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

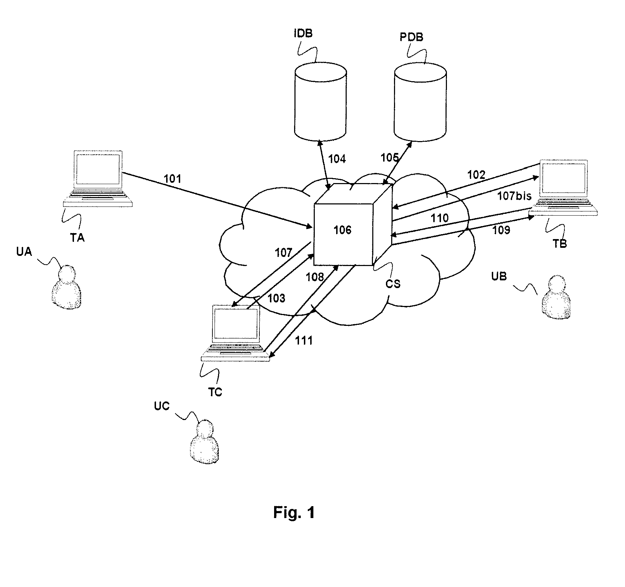

D'autres buts, caractéristiques et avantages de l'invention apparaîtront à travers la description qui va suivre, donnée uniquement à titre d'exemple non limitatif, et faite par référence aux dessins annexés dans lesquels la figure 1 représente de manière schématique un système de communication intégrant un dispositif selon l'invention et les échanges entre les entités de ce système.

L'invention est décrite en détail dans le contexte de son application à un service en ligne de partage de contenus numériques sous forme de réseau social. Elle s'applique plus généralement à tout système de partage d'images dans lequel il est possible de déterminer une relation existant entre deux utilisateurs de ce système: par exemple un réseau d'entreprise ou un réseau domestique dont les utilisateurs appartiennent à des groupes prédéfinis, représentatifs de leurs relations réciproques.

Le système représenté à la figure 1 comprend:
- un serveur CS, sous forme de serveur Web, mettant en oeuvre le service en ligne de partage de contenus et gérant l'accès à un réseau social via lequel ce service est accessible;
- une première base de données, pour le stockage d'images et de vidéos numériques et la gestion des droits d'accès à ces images ou vidéos; cette première base est référencée IDB et nommée par la suite "base de données d'images";
- une deuxième base de données, pour le stockage et la gestion de profils d'utilisateurs, référencée PDB et nommée par la suite "base de données de profils",
- des terminaux TA, TB et TC appartenant à des utilisateurs UA, UB et UC respectivement, et dotés d'une application logicielle de communication et d'une interface matérielle de communication pour établir une connexion à travers le réseau Internet avec le serveur CS.

Le serveur CS est apte à interroger la base de données de profils PDB pour y enregistrer un profil en association avec une identification d'un utilisateur ou extraire les données d'un tel profil.

Le serveur CS est apte à interroger la base de données d'images IDB pour y déposer ou en extraire un contenu (image ou vidéo). Chaque contenu y est enregistré en association avec une identification d'un utilisateur et des droits d'accès définis pour ce contenu. Ainsi un utilisateur, qui accède au service de partage de contenus et établit une communication avec le serveur CS, peut demander à déposer des contenus qu'il souhaite partager et définir les droits d'accès à ces contenus.

La base de données d'images IDB est en outre conçue pour stocker en association avec une image ou une vidéo, des identifications des personnes qui sont éventuellement représentées dans cette image ou vidéo, ainsi qu'une indication de la zone d'image et/ou de la partie de vidéo dans laquelle cette personne est représentée. Le serveur CS est apte à interroger la base de données d'images IDB pour stocker ou au contraire obtenir de telles identifications ou indications.

Ces identifications de personnes sont soit déterminées automatiquement par le serveur CS, soit reçues de l'utilisateur qui fournit l'image ou la vidéo à stocker.

Le serveur CS comprend dans ce but un module d'analyse d'image, approprié pour mettre en oeuvre un algorithme de «reconnaissance faciale». Ce module d'analyse d'image permet d'identifier une personne représentée dans une photo ou une vidéo numérique. Un tel algorithme peut consister à comparer les caractéristiques extraites du visage de la personne représentée avec un ensemble de visages stockés en base de données. De tels algorithmes sont connus dans l'état de la technique et ne seront pas décrits plus en détail. Certains d'entre eux comprennent en outre des fonctionnalités d'indexation et de recherche de visages. Ainsi, une fois les images analysées, il devient possible de rechercher parmi un ensemble d'images celles sur lesquelles est représentée une personne en particulier.

Le serveur CS utilise ainsi son module d'analyse d'image pour obtenir une identification des personnes qui sont représentées dans les images stockées dans la base de données d'images IDB: ces identifications sont ensuite stockées en association avec l'image ou la vidéo concernée et avec une indication de la zone d'image et/ou de la partie de vidéo dans laquelle cette personne est représentée.

En complément ou en variante, au lieu de mettre en oeuvre une reconnaissance faciale, il peut être prévu que l'utilisateur qui fournit une image à stocker, transmette au serveur une identification (nom ou alias de la personne dans le réseau social) des personnes qui se trouvent sur cette photo. Dans cette variante, il est prévu une interface utilisateur dans une page Web qui permet à un utilisateur de détourer une zone de l'image où se trouve la personne pour laquelle une identification est fournie ou un module de reconnaissance de visage qui détoure automatiquement les visages, l'utilisateur n'ayant plus qu'à indiquer le nom (ou identifiant et mot de passe) des personnes concernées. L'indication ainsi fournie par l'utilisateur peut en outre servir à définir simplement la zone d'image à traiter.

Le serveur CS comprend en outre un module de traitement d'image, apte à modifier une image ou une séquence d'images, de telle sorte qu'une personne représentée sur cette ou ces images ne soit pas identifiable: la fonction de traitement d'image appliquée est donc une fonction rendant le premier utilisateur non identifiable par le deuxième utilisateur. Cette modification est opérée typiquement en masquant tout ou partie du visage - voire également tout ou partie du corps - de la personne représentée. Une telle opération de masquage est connue de l'état de la technique et consiste par exemple à:
- appliquer une fonction de floutage au visage de la personne représentée, ou
- masquer une partie au moins du visage de la personne lui superposant un rectangle opaque (bandeau noir, usuellement) ou tout autre forme opaque ou semi-opaque, rendant ce visage non identifiable.

Lorsqu'il s'agit de traiter une vidéo, les différentes images de la vidéo sur lesquelles est représentée la personne à masquer seront traitées par le module de traitement d'image.

Ce module de traitement d'image permet donc de mettre en oeuvre une anonymisation d'images.

Généralement, le réseau social est constitué de sorte qu'un utilisateur, membre de ce réseau, a la possibilité de se constituer un « groupe d'amis » avec lequel les principes d'interaction et de partage seront communs pour l'ensemble des membres appartenant au groupe.

Chaque utilisateur du réseau social dispose notamment de moyens pour définir les différents types de relations qu'il entretient avec les différents utilisateurs du réseau social, c'est-à-dire les différents groupes d'utilisateurs pour lesquels cet utilisateur a un type donné de relation. Les données définissant ces différents types de relations sont enregistrées par exemple dans le profil de cet utilisateur, tel que mémorisé dans la base de données de profils PDB.

Dans ce but, un profil d'un utilisateur - par exemple utilisateur UB - comprend une liste des autres utilisateurs du réseau social qui sont en relation, via le réseau social, avec cet utilisateur UB. Cette liste comprend optionnellement plusieurs sous-listes, définissant chacune un groupe d'utilisateurs et un type de relation associé à ce groupe d'utilisateurs, par exemple :
- une sous-liste comprenant les membres de la famille de cet utilisateur UB et définissant donc quels utilisateurs sont en relation avec l'utilisateur UB en tant que membre de la famille de l'utilisateur UB;
- une sous-liste comprenant les amis proches de cet utilisateur UB et définissant une relation de type "amis proches" et définissant donc quels utilisateurs sont en relation avec l'utilisateur UB en tant qu'ami proche de l'utilisateur UB;
- une sous-liste comprenant les utilisateurs n'appartenant pas aux deux autres sous-listes et comprenant les autres personnes en relation, via le réseau social, avec cet utilisateur UB.

Dans cet exemple, les utilisateurs du réseau social n'appartenant à aucune de ces sous-listes sont considérés comme n'étant pas connus de l'utilisateur UB : il est considéré qu'il y a absence de relation entre cet utilisateur UB et l'un quelconque de ces utilisateurs. Selon le même principe, pour tout utilisateur non membre du réseau social, il est considéré qu'il y a absence de relation entre cet utilisateur et un utilisateur membre du réseau social.

Chaque utilisateur du réseau social dispose également de moyens pour définir des règles d'anonymisation : ces règles sont définies pour un utilisateur UB, relativement à une information représentative:
- soit d'une absence de relation entre cet utilisateur UB et un autre utilisateur du réseau social,
- soit d'une relation existant, implicitement ou explicitement, au sein du réseau social entre cet utilisateur UB et un autre utilisateur du réseau social.

Une règle d'anonymisation détermine s'il doit ou non y avoir anonymisation d'un utilisateur U1 représenté sur une image, lorsque cette image est destinée à être présentée à un autre utilisateur U2 du réseau social, c'est-à-dire si cette image doit, avant présentation à cet autre utilisateur, être modifiée de manière à ce que le premier utilisateur U1 ne soit pas identifiable par le deuxième utilisateur U2. Il est pris en compte dans cette détermination, la relation existant entre U1 et U2 (ou absence de relation), que cette relation soit explicite (déclarée ou qualifiée par U1) ou implicite (ni déclarée, ni qualifiée explicitement par U1, mais résultant par exemple implicitement de paramétrages effectués par U1, définissant des groupes d'utilisateurs avec lesquels il interagit de manière différente pour chaque groupe).

De préférence, une règle d'anonymisation définit en outre la fonction de traitement d'image à appliquer pour l'anonymisation: floutage, masquage, etc. En l'absence d'une telle définition, une fonction par défaut est appliquée automatiquement.

Selon une première variante, les règles d'anonymisation sont enregistrées sous la forme d'un tableau, comprenant une liste de type de relations et, pour chaque type de relation, une information indiquant s'il doit y avoir anonymisation ou non. Par exemple:

| Type de relation | Anonymisation |
|---|---|
| Relation de type "famille" | NON |
| Relation de type "ami proche" | NON |
| Autre type de relation | OUI |
| Absence de relation | OUI |

Selon une deuxième variante, les règles d'anonymisation sont enregistrées sous forme de tableau, comprenant une liste de groupes d'utilisateurs et, pour chaque groupe, une information indiquant s'il doit y avoir anonymisation ou non. Dans cette deuxième variante, chaque groupe d'utilisateur représente, implicitement au moins, une relation particulière. En ce sens, la relation existant entre deux utilisateurs découle implicitement de paramétrages effectués par un de ces utilisateurs, lorsque celui-ci définit un groupe d'utilisateurs avec lesquels il interagit de manière particulière, différente a priori de la manière dont il interagit avec des utilisateurs d'un autre groupe.

Les données décrivant les règles d'anonymisation définies par un utilisateur sont enregistrées par exemple dans le profil de cet utilisateur, qui est mémorisé dans la base de données de profils PDB.

Ces règles d'anonymisation seront applicables à toutes les images, diffusées à travers le réseau social et comprenant une représentation de cet utilisateur: que ce soit une représentation de son visage et/ou de tout ou partie de son corps, du moment que cette représentation permet d'identifier cet utilisateur.

Dans un mode de réalisation particulier, la modification appliquée à l'image sera ainsi adaptée à la nature de la relation entre l'utilisateur représenté sur l'image et celui auquel cette image est destinée à être présentée: cette modification sera d'autant plus importante (par exemple, masquage de tout le visage et de tout le corps) que les deux utilisateurs se connaissent bien / sont proches dans le réseau social. Elle pourra être plus succincte, par exemple si les deux utilisateurs n'ont aucun lien dans le réseau social (bandeau noir sur les yeux uniquement). Le but est à chaque fois que la personne représentée ne soit pas reconnue par la personne à laquelle l'image est présentée. Selon une variante de réalisation, l'utilisateur a la possibilité de définir une règle de sélection de la fonction de modifications d'image à appliquer en cas d'anonymisation requise. Selon une autre variante de réalisation, le choix de cette fonction de modification d'image également est prédéfini automatiquement / enregistré par défaut avec la définition de la règle d'anonymisation.

Le serveur CS est conçu pour appliquer ces règles d'anonymisation, c'est-à-dire pour déterminer si l'anonymisation est requise et pour appliquer, lorsque l'anonymisation est requise, la fonction de traitement d'image définie par cette règle.

La figure 1 représente les différents échanges ayant lieu entre les entités du système représenté sur cette même figure.

Lors de l'étape 101, l'utilisateur UA utilise son terminal TA pour établir une connexion avec le serveur CS, puis pour transférer des images numériques, sous forme de photos numériques, vers le serveur CS afin de les partager avec d'autres membres du réseau social. Lors de cette connexion, l'utilisateur UA spécifie quels sont les utilisateurs du réseau social qui sont autorisés à accéder à ces photos: un utilisateur en particulier, un groupe d'utilisateur (ses amis, par exemple) ou tous les utilisateurs membres du réseau social. On suppose à titre d'exemple que l'utilisateur UA autorise au moins l'utilisateur UC à accéder à ces photos et que sur l'une de ces photos est représenté l'utilisateur UB.

A réception des photos à partager, le serveur CS obtient une identification des personnes représentées sur chaque photo, soit comme résultat d'une analyse d'image effectuée par le module d'analyse d'image du serveur CS, soit sur la base d'une information communiquée par l'utilisateur UA. Ces identifications sont mémorisées en association avec chaque photo dans la base de données d'images IDB, ainsi qu'avec une indication de la zone d'image et/ou de la partie de vidéo dans laquelle cette personne est représentée.

En option, le serveur CS transmet via le terminal TB une notification à l'utilisateur TB, pour l'informer qu'une photo fournie par l'utilisateur UA a été rendue accessible par l'utilisateur UA via le réseau social.

A l'étape 102, l'utilisateur UB, désireux de protéger sa vie privée, utilise son terminal TB pour établir une connexion avec le serveur CS et définir des règles d'anonymisation, qui seront applicables à toutes les images diffusées à travers le réseau social et comprenant sa représentation. L'utilisateur UB spécifie, au moyen de ces règles d'anonymisation, les groupes d'utilisateurs pour lesquels une anonymisation est requise, ainsi que la nature du traitement à appliquer: masquage, floutage, ou autre.

On suppose à titre d'exemple que l'utilisateur UB requiert une anonymisation pour les images destinées à être présentées à un utilisateur qui n'est pas un ami de l'utilisateur UB. A titre d'exemple, il est supposé ici que l'utilisateur UA est un ami de l'utilisateur UB, mais que l'utilisateur UC ne fait pas partie du groupe des amis de l'utilisateur UB.

Il est à noter que les étapes 101 et 102 s'exécutent indépendamment l'une de l'autre, dans un ordre quelconque et peuvent être chacune répétée plusieurs fois avant que ne soient exécutées les étapes 103 à 110 suivantes.

A l'étape 103, exécutée postérieurement aux étapes 101 et 102, l'utilisateur UC utilise son terminal TC pour établir une connexion avec le serveur CS et visualiser des photos numériques partagées avec d'autres membres du réseau social. Ces photos peuvent être:
- des photos dont il est propriétaire,
- des photos sur lesquelles un droit d'accès lui a été conféré par un membre,
- des photos publiques, c'est-à-dire accessibles à tous les membres du réseau social.

Lors de cette étape 103, une requête d'accès à ces photos, provenant du terminal TC, parvient au serveur CS. A réception de cette requête, le serveur CS vérifie que l'utilisateur UC est bien membre du réseau social avant d'exécuter l'étape 104 suivante.

A l'étape 104, le serveur CS interroge la base de données d'images IDB pour obtenir l'ensemble des photos demandées.

Lors de l'étape 104, le serveur CS interroge la base de données d'images IDB pour obtenir une identification des personnes représentées dans chaque photo demandée. Cette identification est soit le résultat d'une analyse d'image effectuée par le module d'analyse d'image du serveur CS, soit déduite d'une information communiquée par l'utilisateur ayant fourni cette photo.

Lors de l'étape 104, le serveur CS obtient, également par interrogation de la base de données d'images IDB, une indication de la zone d'image dans laquelle les personnes identifiées sont représentées. Comme cela ressort clairement pour l'homme du métier, une telle indication définit la zone d'image à traiter. Elle est obtenue par exemple sous forme d'une définition du tracé du contour de la zone d'image en question (coordonnées de points appartenant à ce contour) ou par une définition d'un rectangle, cercle ou autre forme géométrique incorporant cette zone (par exemple, coordonnées des sommets du rectangle dans l'image).

A l'étape 105, le serveur CS interroge la base de données de profil PDB pour obtenir les règles d'anonymisation définies par les utilisateurs représentés dans chaque photo. Le serveur CS obtient également une information représentative de la relation (ou absence de relation) le ou les personnes représentées sur les photos obtenues à l'étape 104 et l'utilisateur UC requérant ces images: cette information est obtenue par exemple par consultation du profil des personnes représentées sur les photos. Ces profils définissent en effet quelle est la nature de cette relation (si elle existe) entre chacune de ces personnes représentées (l'utilisateur UB, notamment) et l'utilisateur UC ou encore quel est le groupe, défini par chacune de ces personnes, dont fait partie l'utilisateur UC.

A l'étape 106, le serveur CS modifie ces photos par application à chaque représentation d'un utilisateur dans une photo de la fonction de traitement d'image éventuellement requise par les règles d'anonymisation définies par les utilisateurs représentés dans chaque photo, en prenant en compte l'information représentative de la relation - ou absence de relation - obtenue à l'étape 105.

Dans ce but, le serveur CS utilise l'indication, obtenue à l'étape 104, de la zone d'image dans laquelle cette personne est représentée, afin de déterminer sur quelle partie de la photo la modification requise doit être appliquée.

Les photos qui ont été fournies par l'utilisateur UC lui-même ne sont toutefois pas modifiées lors de l'étape 106.

Dans le cas d'exemple choisi, une photo, fournie par l'utilisateur UA, représentant l'utilisateur UB et destinée à être transmise à l'utilisateur UC subira une modification afin que l'utilisateur UB ne soit pas identifiable par l'utilisateur UC, en raison de la règle d'anonymisation définie par l'utilisateur UB qui requiert une anonymisation pour les photos transmises à un utilisateur qui n'est pas ami de l'utilisateur UB.

A l'étape 107 le serveur CS transmet à l'utilisateur les photos demandées et modifiées. Ainsi, l'utilisateur UC recevant les photos, ne pourra reconnaître l'utilisateur UC sur les photos qu'il reçoit. En option, le serveur CS transmet via le terminal TB une notification à l'utilisateur TB, pour l'informer qu'une photo fournie par l'utilisateur UA a été transmise à l'utilisateur UC après anonymisation.

Selon un autre mode de réalisation, il est prévu qu'une fonction de demande de suppression d'une anonymisation soit disponible, par exemple à partir de la page Web comprenant une photo fournie à un utilisateur membre du réseau social.

Dans ce mode de réalisation, suite à l'étape 107, l'utilisateur UC clique sur un élément de l'interface utilisateur de la page Web pour déclencher cette fonction. Une requête 108 de suppression d'anonymisation est alors transmise par le terminal TC au serveur CS.

Le serveur CS émet alors une requête de demande d'autorisation à l'utilisateur TB via le terminal TB: cette requête de demande d'autorisation comprend la photo non modifiée, une identification de l'utilisateur UC requérant la suppression d'anonymisation et une identification de l'utilisateur UA ayant fourni la photo.

Si l'utilisateur UB autorise la suppression d'anonymisation (par exemple après échange avec l'utilisateur UA ayant fourni la photo), la photo sans anonymisation - au moins en ce qui concerne l'utilisateur UB - est alors transmise lors de l'étape 110 à l'utilisateur UC via le terminal TC.

Les étapes 108 à 110 sont répétées pour chaque utilisateur représenté dans la photo et pour lequel l'utilisateur UC requiert l'anonymisation.

En résumé, l'invention concerne, selon un premier aspect, un procédé de traitement d'au moins une image, comprenant une représentation d'un premier utilisateur et destinée à être présentée à un deuxième utilisateur, comprenant:
- une étape d'obtention d'une information représentative, soit d'une absence de relation entre le premier et le deuxième utilisateur, soit d'une relation existant entre le premier et le deuxième utilisateur;
- une étape de modification de ladite image avant présentation au deuxième utilisateur, de manière à ce que le premier utilisateur ne soit pas identifiable par le deuxième utilisateur, ladite étape de modification étant destinée à être exécutée s'il est déterminé, conformément à au moins une règle d'anonymisation définie relativement à ladite information, que ladite image doit subir une telle modification.

L'invention concerne, selon un deuxième aspect, un dispositif de traitement d'au moins une image, comprenant une représentation d'un premier utilisateur et destinée à être présentée à un deuxième utilisateur, comprenant:
- des moyens d'obtention d'une information représentative, soit d'une absence de relation entre le premier et le deuxième utilisateur, soit d'une relation existant entre le premier et le deuxième utilisateur;
- des moyens pour déterminer, conformément à au moins une règle d'anonymisation définie relativement à ladite information, si ladite image doit subir, avant présentation au deuxième utilisateur, une modification par application d'une fonction de traitement d'image rendant le premier utilisateur non identifiable par le deuxième utilisateur;
- des moyens de modification d'au moins une zone de ladite image contenant ladite représentation par application d'une dite fonction de traitement d'image.

## Revendications

1. Procédé de traitement d'au moins une image, comprenant une représentation d'un premier utilisateur (UB) et destinée à être présentée à un deuxième utilisateur (UC), comprenant:
- une étape d'obtention (105) d'une information représentative, soit d'une absence de relation entre le premier et le deuxième utilisateur, soit d'une relation existant entre le premier et le deuxième utilisateur;
- une étape pour déterminer, conformément à au moins une règle d'anonymisation définie relativement à ladite information, si ladite image doit subir, avant présentation au deuxième utilisateur, une modification par application d'une fonction de traitement d'image rendant le premier utilisateur non identifiable par le deuxième utilisateur;
- une étape de modification (106) d'au moins une zone de ladite image contenant ladite représentation par application d'une dite fonction de traitement d'image.

2. Procédé selon la revendication 1, comprenant une étape d'obtention (104) d'une définition de ladite zone d'image.

3. Procédé selon la revendication 1, dans lequel ladite relation est une relation au sein d'un réseau social dont font partie le premier et le deuxième utilisateur.

4. Procédé selon la revendication 1, dans lequel une dite règle d'anonymisation est définie par le premier utilisateur.

5. Procédé selon la revendication 1, comprenant une étape d'envoi d'une notification au premier utilisateur pour l'informer de la présentation de ladite image audit deuxième utilisateur.

6. Procédé selon la revendication 1 comprenant une étape d'obtention (101) d'une identification du premier utilisateur à partir d'une information fournie par un troisième utilisateur, fournissant ladite au moins une image.

7. Procédé selon la revendication 1 comprenant une étape d'obtention (101) d'une identification du premier utilisateur par application d'une méthode de reconnaissance de visage à ladite image.

8. Support d'enregistrement lisible par un processeur de données sur lequel est enregistré un programme comprenant des instructions de code de programme pour l'exécution des étapes d'un procédé selon l'une des revendications 1 à 6.

9. Dispositif de traitement d'au moins une image, comprenant une représentation d'un premier utilisateur (UB) et destinée à être présentée à un deuxième utilisateur (UC), comprenant:
- des moyens d'obtention (105) d'une information représentative, soit d'une absence de relation entre le premier et le deuxième utilisateur, soit d'une relation existant entre le premier et le deuxième utilisateur;
- des moyens pour déterminer, conformément à au moins une règle d'anonymisation définie relativement à ladite information, si ladite image doit subir, avant présentation au deuxième utilisateur, une modification par application d'une fonction de traitement d'image rendant le premier utilisateur non identifiable par le deuxième utilisateur;
- des moyens de modification (106) d'au moins une zone de ladite image contenant ladite représentation par application d'une dite fonction de traitement d'image.
